(19) Europäisches Patentamt / European Patent Office / Office européen des brevets

(11) **EP 4 763 714 A1**

(12) **DEMANDE DE BREVET EUROPEEN**

(43) Date de publication:
**24.06.2026 Bulletin 2026/26**

(21) Numéro de dépôt: **25225897.5**

(22) Date de dépôt: **19.12.2025**

(51) Classification Internationale des Brevets (IPC):
**B64G 1/44** *(2006.01)*    **B64G 1/54** *(2006.01)*
**H10F 10/00** *(2025.01)*    *B64G 1/42* *(2006.01)*
*H02S 50/00* *(2014.01)*

(52) Classification Coopérative des Brevets (CPC):
**B64G 1/443; B64G 1/54; H02S 50/00; H10F 10/00;**
B64G 1/428; G01R 19/2513

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **20.12.2024 FR 2414825**

(71) Demandeur: **THALES**
**92190 Meudon (FR)**

(72) Inventeurs:
• **Boulanger, Bernard Pierre**
  **06156 CANNES LA BOCCA CEDEX (FR)**
• **Chassoulier, Damien**
  **06156 CANNES LA BOCCA CEDEX (FR)**
• **Notarianni, Michael**
  **06156 CANNES LA BOCCA CEDEX (FR)**

(74) Mandataire: **Lavoix**
**2, place d'Estienne d'Orves**
**75441 Paris Cedex 09 (FR)**

(54) **SYSTÈME COMPRENANT UN VÉHICULE SPATIAL ET PROCÉDÉ POUR DÉTERMINER UN PHÉNOMÈNE ÉLECTRIQUE D'UN GÉNÉRATEUR SOLAIRE**

(57)    La présente invention concerne un système (1) comprenant un véhicule spatial (3) avec au moins un générateur solaire (9), chaque générateur solaire comprenant une pluralité de sections et étant propre à fournir le courant électrique à au moins un consommateur d'énergie électrique (12, 14, 16, 18) du véhicule spatial (3) ; au moins une paire (24) de conducteurs, les paires (24) de conducteurs comprenant au moins un conducteur (24a, 24b) pour chaque polarité ; le véhicule spatial (3) comprenant pour chaque section (22) au moins un capteur (28, 28a, 28b, 28c, 28d) ; et au moins un dispositif (16, 20) de détection d'un phénomène électrique, le dispositif de détection d'un phénomène électrique étant propre à : déterminer (1000) un courant de mode commun pour chaque section (22) et/ou la dérivée du courant de mode commun pour chaque section (22), et

déterminer la présence d'un phénomène électrique et la ou les section(s) (22) du générateur solaire (9) concernée(s) par le phénomène électrique.

FIG.2

EP 4 763 714 A1

**Description**

La présente invention concerne un système comprenant un véhicule spatial avec au moins un générateur solaire. En outre, la présente invention concerne un procédé mise en œuvre par ordinateur pour déterminer un phénomène électrique d'un générateur solaire.

Les générateurs solaires comprennent des cellules solaires avec des verres de protection (coverglass). En orbit, les verres de protection (coverglass) se chargent positivement, et ils deviennent ainsi avec les cellules solaires un condensateur qui peut se décharger à condition de la présence d'un plasma en surface. Cette bulle de plasma initiale est générée par une décharge électrostatique (ESD) ou suite à un impact micrométéorite ou débris orbital (MMOD). Ce plasma est alors entretenu par le courant de décharge des verres de protection qui est concentré sur le site de spot cathodique qui émet des électrons. La décharge des verres de protection se propage ainsi depuis le spot cathodique. La propagation de décharge électrostatique des coverglass sur une aile d'un générateur solaire s'appelle un Flashover (FO). Une décharge électrostatique peut créer ensuite un arc électrique.

US 9,190,836 B2 utilise une détection par la variation du ratio de courant entre les lignes nominale et redondante, avec des sondes à effet Hall ou des dispositifs magnétiques.

The article "Mapping of the Appleton Anomaly Using Arc Detectors on Starlink Group 6-1 Satellites" de Starlink au 17th Spacecraft Charging Technology Conference, Palais des Papes, Avignon, France, June 17-21, divulgue un système de détection d'un arc. Un détecteur est positionné sur le corps du satellite qui ne permet pas de localiser la section qui émet le flashover, les décharges

On connaît dans EP1 709 504 B1 un dispositif pour protéger des panneaux solaires. Le dispositif comprend un circuit de détection de chute de tension et un circuit d'extinction d'arc.

D'autres simulations ont été faites au sol, par exemple au Japon avec le Kyushu Institut of technologies, cf. Okumura, T et al. « Flashover plasma characteristics on 5m2 solar array panels in a simulated plasma environment of geostationary orbit and low earth orbit », AIAA 2010-1602, 48th, Aerospace Science Meeting, Orlando, USA, January, 2010, et en Europe, cf. Virginie Inguimbert et al. « Measurements of the Flashover Expansion on a Real-Solar Panel-Preliminary Results of EMAGS3 Project » IEEE TRANSACTIONS ON PLASMA SCIENCE, VOL. 41, NO. 12, DECEMBER 2013.

Mais dû à la limitation de surface, notamment, des essais de simulation faits au sol il est difficile de valider des outils de modélisations car l'architecture et les modalités sont très différentes par rapport à l'utilisation réelle en vol.

Le but de l'invention est alors de proposer un système et un procédé permettant de détecter des phénomènes électriques d'un générateur solaire en orbite, par exemple un flashover. En particulier le but de l'invention est de proposer un système et un procédé de passivation d'un arc électrique qui peut être actionnée de manière autonome ou activée après détection de l'arc électrique.

A cet effet, l'invention a pour objet un système comprenant :

un véhicule spatial avec :

au moins un générateur solaire propre à générer un courant électrique, chaque générateur solaire étant couvert par un matériau transparent de protection, chaque générateur solaire comprenant une pluralité de sections ;
au moins un consommateur d'énergie électrique, chaque générateur solaire étant propre à fournir le courant électrique à au moins un consommateur d'énergie électrique du véhicule spatial ;
au moins une paire de conducteurs électriques associée à chaque section pour fournir le courant électrique de chaque section de chaque générateur solaire au consommateurs d'énergie électrique respectifs, les paires de conducteurs comprenant au moins un conducteur pour chaque polarité ;

le véhicule spatial comprenant pour chaque section associée à au moins une paire de conducteur au moins un capteur pour mesurer une valeur dépendant du ou des courants dans les conducteurs ; et
le système comprenant au moins un dispositif de détection d'un phénomène électrique du générateur solaire, le dispositif de détection d'un phénomène électrique étant propre à :

déterminer un courant de mode commun pour chaque section et/ou la dérivée du courant de mode commun pour chaque section, et
déterminer la présence d'un phénomène électrique et la ou les section(s) du générateur solaire concernée(s) par le phénomène électrique déterminé à partir du courant de mode commun de chaque section et/ou la dérivée du courant de mode commun de chaque section.

Suivant d'autres aspects avantageux de l'invention, le système comprend une ou plusieurs des caractéristiques suivantes, prises isolément ou suivant toutes les combinaisons techniquement possibles :

- chaque générateur solaire comprend au moins deux sections ;
- chaque générateur solaire forme une aile photovoltaïque ;
- Système selon l'une des revendications précédentes, caractérisé en ce que le véhicule spatial est un satellite et/ou une sonde spatiale ;
- le capteur est un capteur mesurant la dérivée d'un courant, en particulier un capteur comprenant une bobine torique, ou un capteur de courant ;
- le système comprenant exactement un capteur par paire de conducteurs ;
- le phénomène électrique est une propagation de décharge, un arc secondaire, un arc primaire sans propagation de décharge, et/ou des courants transitoires entre générateur solaire et propulsion électrique ;
- le véhicule spatial est propre à passiver la ou les sections concernée(s) déterminée(s), par exemple à court-circuiter la ou les section(s) concernée(s) déterminée(s) ;
- le dispositif de détection d'un phénomène électrique étant propre à calculer la somme de toutes les courants de mode commun de chaque section et/ou à calculer la somme de toutes les dérivées des courants de mode commun de chaque section d'un générateur solaire, et en utilisant le résultat du calcul de la somme de tous les courants de mode commun de chaque section et/ou de la somme de toutes les dérivées des courants de mode commun de chaque section d'un générateur solaire, le dispositif de détection d'un phénomène électrique étant propre à déterminer le type du phénomène électrique parmi une détection d'une propagation de décharge, un arc secondaire, un arc primaire sans propagation de décharge, et/ou des courants transitoires entre générateur solaire et propulsion électrique ;
- le véhicule spatial comprend une unité de conditionnement d'énergie et l'unité de conditionnement d'énergie comprend les capteurs.
- au moins un dispositif de détection d'un phénomène électrique du générateur solaire est agencé au sol ;
- au moins un dispositif de détection d'un phénomène électrique du générateur solaire est agencé dans le véhicule spatial ; et/ou
- une première partie d'un dispositif de détection d'un phénomène électrique du générateur solaire est agencé dans le véhicule spatial et une deuxième partie du dispositif de détection d'un phénomène électrique du générateur solaire est agencé au sol.

L'invention concerne également un procédé pour déterminer un phénomène électrique d'un générateur solaire d'un véhicule spatial avec :

au moins un générateur solaire propre à générer un courant électrique, chaque générateur solaire étant couvert par un matériau transparent de protection, chaque générateur solaire comprenant une pluralité de sections ;
au moins un consommateur d'énergie électrique, chaque générateur solaire étant propre à fournir le courant électrique à au moins un consommateur d'énergie électrique du véhicule spatial ;
au moins une paire de conducteurs électrique associé à chaque section pour fournir l'énergie électrique de chaque section de chaque générateur solaire aux consommateurs d'énergie électrique respectifs, les paires de conducteurs comprenant au moins un conducteur pour chaque polarité ;

le procédé comprenant :

obtenir une mesure dans chaque paire de conducteurs une valeur dépendant du ou des courants dans les conducteurs ; et
déterminer le courant de mode commun pour chaque section et/ou la dérivée du courant de mode commun pour chaque section, et
déterminer la présence du phénomène électrique et la ou les sections du générateur solaire concernée(s) par le phénomène électrique, à partir du courant de mode commun de chaque section et/ou la dérivée du courant de mode commun de chaque section.

L'invention concerne également un programme d'ordinateur comportant des instructions logicielles qui, lorsqu'elles sont exécutées par un ordinateur, mettent en œuvre un procédé de tel que défini ci-dessus.

L'invention apparaîtra plus clairement à la lecture de la description qui va suivre, donnée uniquement à titre d'exemple non limitatif, et faite en référence aux dessins dans lesquels :

[Fig. 1] la figure 1 montre schématiquement un système selon un mode de réalisation ;
[Fig. 2] la figure 2 montre schématiquement un générateur solaire ;
[Fig. 3] la figure 3 montre schématiquement un capteur d'un premier mode de réalisation ;
[Fig. 4] la figure 4 montre schématiquement un capteur d'un deuxième mode de réalisation ;
[Fig. 5] la figure 5 montre schématiquement un capteur d'un autre mode de réalisation ;

[Fig. 6] la figure 6 est une vue de dessus du capteur de la figure 5 ;

[Fig. 7] la figure 7 montre schématiquement un capteur d'un autre mode de réalisation ;

[Fig. 8] la figure 8 montre un graphe du courant et de la dérivée du courant d'une section du générateur solaire qui émet un FO ; et

[Fig. 9] la figure 9 montre un graphe du courant et de la dérivée du courant d'une section du générateur solaire qui collecte le courant d'un FO ; et

[Fig. 10] la figure 10 montre un organigramme d'un procédé selon un mode de réalisation.

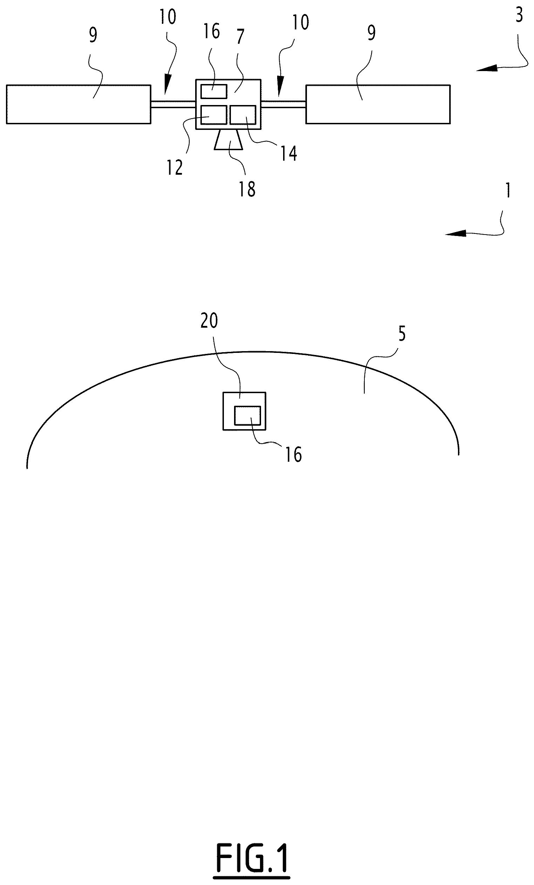

La figure 1 montre schématiquement un système 1 selon un mode de réalisation. Le système 1 comprend un véhicule spatial 3. Le véhicule spatial 3 orbite autour de la terre 5.

Dans un mode de réalisation le véhicule spatial 3 est un satellite.

Le véhicule spatial 3 comprend un corps 7. En outre, le véhicule spatial 3 comprend un ou plusieurs générateurs solaires 9. Chaque générateur solaire est relié au corps 7. Chaque générateur solaire est propre à générer un courant électrique. Le terme générateur solaire employé ci-dessous correspond à une aile de générateur solaire.

Les générateurs solaires 9 sont, dans un mode de réalisation, respectivement reliés par un mécanisme d'entrainement 10 des panneaux solaires (en anglais SADM - Solar Array Drive Mechanism) au corps 7 du véhicule spatial 3. Le mécanisme d'entrainement 10 est propre à aligner de manière optimale les générateurs solaires 9 vis-à-vis du soleil. Par exemple ce mécanisme comprend un moteur et, en particulier motoréducteur. En outre, le mécanisme d'entrainement 10 comprend une partie des conducteurs transmettant le courant électrique généré par les générateurs solaires 9 respectifs au corps 7 du véhicule spatial 3.

Dans un autre mode de réalisation, le ou les générateurs solaires 9 sont fixé au corps 7 de manière immobile par rapport au corps 7. En d'autre termes le ou les générateurs solaires 9 ne peuvent pas être bougé vis-à-vis du corps 7.

Le corps du véhicule spatial 3 comprend au moins un consommateur d'énergie électrique 12.

Par exemple le consommateur d'énergie électrique 12 est un instrument d'observation et/ou un moyen de télécommunications.

Chaque générateur solaire 9 étant propre à fournir le courant électrique à au moins un consommateur d'énergie électrique 12 du véhicule spatial 3.

En outre, le corps 7 du véhicule spatial 3 comprend une unité de conditionnement d'énergie 14 (Power Conditioning Unit - PCU en anglais) et/ou un bus d'alimentation. L'unité de conditionnement d'énergie 14 règle l'énergie électrique en provenance des différentes sources d'énergie électrique, notamment des générateurs solaires 9 et/ou des batteries. En particulier l'unité de conditionnement d'énergie 14 règle le courant et/ou la tension sur le bus d'alimentation. Le ou les consommateurs d'énergie électrique 12 sont par exemple connecté(s) au bus d'alimentation.

Le bus d'alimentation est propre à fournir un courant au ou à chaque consommateur d'énergie électrique 12, par exemple les instruments et/ou les moyens de télécommunications.

Optionnellement, le véhicule spatial 3 comprend un ou plusieurs dispositifs 16 de détection d'un phénomène électrique du générateur solaire. Par exemple, dans un mode de réalisation le véhicule spatial 3 comprend pour chaque générateur solaire 9 un dispositif 16 de détection d'un phénomène électrique distinct. Dans un autre mode de réalisation, un seul dispositif 16 de détection d'un phénomène électrique traite les phénomènes électriques pour tous les générateurs solaires 9 du véhicule spatial 3. Dans ce mode de réalisation, le dispositif 16 est un consommateur de l'énergie électrique. Un phénomène électrique est un effet électrique qui n'est pas lié à la génération d'un courant électrique par le générateur solaire 9. Par exemple, le phénomène électrique est une propagation de décharge des coverglass sur un générateur solaire (Flashover), un arc secondaire, un arc primaire sans propagation de décharge, et/ou des courants transitoires entre générateur solaire et propulsion électrique.

Le dispositif de détection d'un phénomène électrique 16 est propre à mettre en œuvre un procédé pour déterminer un phénomène électrique d'un générateur solaire d'un véhicule spatial qui seront décrit ultérieurement.

Le dispositif 16 est un circuit électronique conçu pour manipuler et/ou transformer des données représentées par des quantités électroniques ou physiques dans des registres du calculateur et/ou des mémoires en d'autres données similaires correspondant à des données physiques dans les mémoires de registres ou d'autres types de dispositifs d'affichage, de dispositifs de transmission ou de dispositifs de mémorisation.

En tant qu'exemples spécifiques, le dispositif 16 est réalisé sous forme d'un composant logique programmable, tel qu'un FPGA (de l'anglais *Field Programmable Gate Array*), ou encore d'un circuit intégré, tel qu'un ASIC (de l'anglais *Application Specific Integrated Circuit*). Dans un autre exemple, le dispositif 16 est au moins réalisé par un traitement analogique de l'information, par exemple un circuit de détection de type comparateur qui peut, par exemple, actionner un circuit de passivation d'un arc électrique.

En variante, lorsque le procédé est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique. Sur le support lisible est alors mémorisé un programme d'ordinateur comprenant des instructions logicielles.

Le véhicule spatial 3 est pourvu, optionnellement, avec un dispositif de propulsion 18. Par exemple, le dispositif de propulsion 18 est un dispositif de propulsion électrique, en particulier une unité de propulsion par plasma (PPU - Plasma Propulsion Unit en anglais). Le dispositif de propulsion 18 est par exemple l'un des consommateurs d'énergie électrique du véhicule spatial. Dans un mode de réalisation, le dispositif de propulsion 18 est connecté au bus d'alimentation.

En outre la figure 1 montre une unité de traitement de données 20 au sol sur la terre. L'unité de traitement de données est propre à recevoir des données du véhicule spatial 3. En particulier l'unité de traitement de données 20 est propre à stocker les données reçues du véhicule spatial 3 dans une base de données.

L'unité de traitement de données 20 est un circuit électronique conçu pour manipuler et/ou transformer des données représentées par des quantités électroniques ou physiques dans des registres du calculateur et/ou des mémoires en d'autres données similaires correspondant à des données physiques dans les mémoires de registres ou d'autres types de dispositifs d'affichage, de dispositifs de transmission ou de dispositifs de mémorisation.

En tant qu'exemples spécifiques, l'unité de traitement de données 20 est réalisée sous forme d'un composant logique programmable, tel qu'un FPGA (de l'anglais *Field Programmable Gate Array*), ou encore d'un circuit intégré, tel qu'un ASIC (de l'anglais *Application Specific Integrated Circuit*), microprocesseur ou microcontrôleur. Dans un autre exemple, le dispositif 20 est au moins réalisé par un traitement analogique de l'information.

En variante, lorsque le procédé est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique. Sur le support lisible est alors mémorisé un programme d'ordinateur comprenant des instructions logicielles.

Dans un mode de réalisation, l'unité de traitement de données 20 comprend le dispositif de détection d'un phénomène électrique du générateur solaire. Dans ce cas, les données reçues du véhicule spatial 3 par l'unité de traitement de données 20 sont les données nécessaires pour déterminer, au moins en partie, le phénomène électrique du générateur solaire.

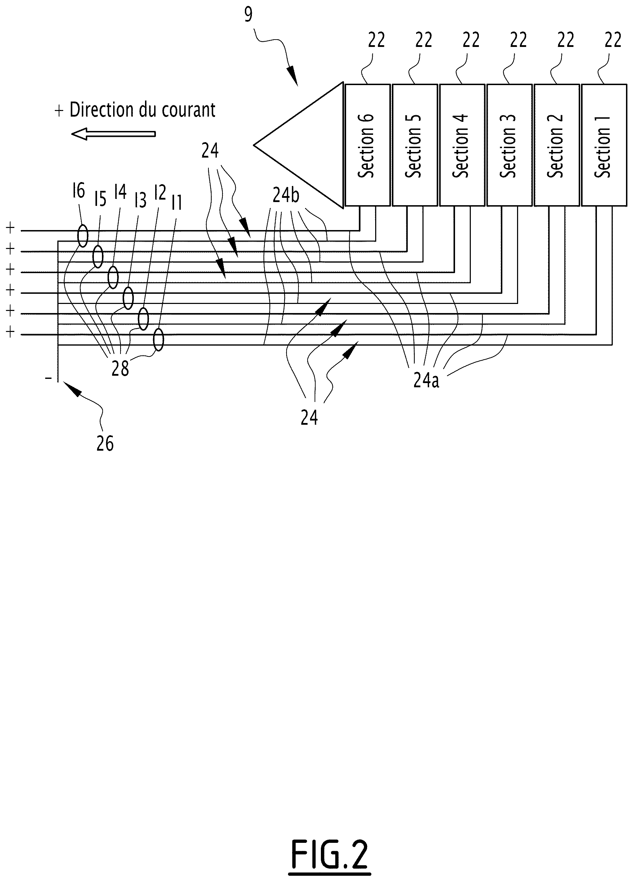

La figure 2 montre schématiquement un générateur solaire 9.

Chaque générateur solaire 9, en particulier les cellules photovoltaïques, est couvert par un matériau transparent de protection, par exemple un verre de protection ou fenêtre de protection. Le verre de protection ou fenêtre de protection, appelé « cover glass » en anglais, est qualifié pour l'utilisation dans l'espace. Par exemple, le verre de protection est adapté aux radiations en orbite. Le verre de protection a par exemple une faible épaisseur. Dans un mode de réalisation l'épaisseur du verre de protection est entre 75 micromètre et 1 millimètre. Le matériau transparent de protection est propre de couvrir un ou plusieurs cellules photovoltaïques.

Chaque générateur solaire 9 comprend une pluralité de sections 22. Chaque section comprend un ou plusieurs strings. Chaque générateur solaire comprend au moins 2 sections, par exemple au moins 3, 4, ou 5 sections, en particulier entre 2 et 90 sections.

Dans un mode de réalisation, une ou plusieurs diodes de blocage sont montées sur chaque string. Les diodes de blocage bloquent un courant inverse dans le string concerné, par exemple en cas d'un string ombré, défaut d'isolement d'un string, ou en cas de panne EPS (Electrical Power Subsystem - Sous-système d'alimentation électrique), dans le cas où le courant passerait du bus vers la section. Par exemple, les diodes isolent un string des autres strings d'une même section, par exemple en cas de défaillance d'un string.

Le ou les générateurs solaires 9 sont propres à fournir le courant électrique au corps 7 du véhicule spatial 3, en particulier à l'unité de conditionnement d'énergie 12 (Power Conditioning Unit - PCU en anglais) et/ou au bus d'alimentation.

Au moins une paire 24 de conducteurs électriques est associée à chaque section 22 de chaque générateur solaire pour fournir le courant électrique de chaque section 22 au(x) consommateur(s) d'énergie électrique 12, 14, 16, 18 respectifs.

Chaque paire 24 de conducteurs comprend au moins un conducteur d'une première polarité 24a, par exemple « + », et au moins un conducteur d'une deuxième polarité 24b, par exemple « - ».

Selon un mode de réalisation, pour chaque polarité la paire 24 de conducteurs comprends plusieurs conducteurs redondants. Les conducteurs redondants sont par exemple séparés les uns des autres au moins dans certains endroits.

Les conducteurs de la deuxième polarité 24b sont dans un exemple connectés à un point de référence des masses 26, par exemple le 0V satellite.

Les conducteurs de la première polarité 24a sont par exemple respectivement connectés à l'unité de conditionnement d'énergie 14, à un bus d'alimentation et/ou à un consommateur d'énergie électrique 12.

Le véhicule spatial 3 comprend pour chaque paire 24 de conducteurs au moins un capteur 28 pour mesurer une valeur dépendant du ou des courants dans les conducteurs 24a, 24b.

Le ou les capteurs 28 sont en dehors de l'unité de conditionnement d'énergie 14.

Selon un mode de réalisation, le ou les capteurs 28 sont intégrés dans l'unité de conditionnement d'énergie 14.

Dans un mode de réalisation, le capteur 28 est un capteur mesurant la dérivée d'un courant, en particulier un capteur comprenant une bobine torique. Donc, la valeur dépendant du ou des courants dans les conducteurs 24a, 24b peut être une dérivée du courant. La tension mesurée aux bornes de la bobine torique est une image de la dérivée du courant passant dans le capteur 28.

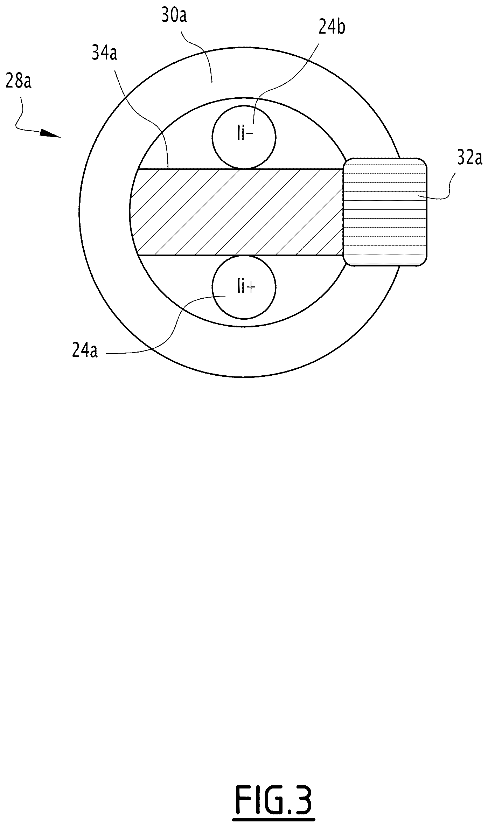

La figure 3 montre schématiquement un capteur 28a d'un premier mode de réalisation. Le capteur 28a est propre pour déterminer une valeur dépendant du ou des courants dans les conducteurs 24a, 24b.

Le capteur 28a comprend un noyau ferromagnétique 30a. Le noyau ferromagnétique peut avoir une géométrie variable.

Sur la figure 3, le noyau ferromagnétique 30a a une forme annulaire circulaire ou une forme d'un tore. Egalement d'autres formes sont possible par exemple, les formes décrit ultérieurement, une forme de « El » ou une forme de « EE ».

Une bobine 32a est monté sur au moins une partie du noyau ferromagnétique 30a. Au moins un conducteur de la première polarité 24a et au moins un conducteur de la deuxième polarité 24b traverse le noyau ferromagnétique 30a, en particulier de manière à ce que les directions des courants dans les conducteurs 24a, 24b soient de sens opposés. Dans un exemple, tous les conducteurs de la première polarité 24a et tous conducteurs de la deuxième polarité 24b traversent le noyau ferromagnétique 30a.

Selon un mode de réalisation, le capteur 28a comprend entre le ou les conducteurs de la première polarité 24a et le ou les conducteurs de la deuxième polarité 24b une barrière d'isolation, en particulier pour isoler électriquement les conducteurs 24a et 24b entre eux.

Le capteur 24a mesure la dérivée de la différence des courants (dl/dt) circulant dans les conducteurs 24a et 24b, en particulier par la bobine 32a. En d'autres termes le capteur 24a mesure la dérivée de la somme vectorielle des courants circulant dans les conducteurs 24a et 24b.

La somme vectorielle du courant de chaque paire de conducteur est également appelée courant de mode commun ou encore courant homopolaire. Dans un exemple, lorsque le phénomène électrique est détecté c'est un courant de mode commun transitoire.

Ce mode de mesure permet une ségrégation entre les circuits de puissance du générateur solaire et les circuits de mesure de ces courants, notamment les capteurs 28. Donc, la fiabilité de la mission n'est pas compromise où une panne soit du capteur ou soit du système d'alimentation sous forme du générateur solaire 9 et/ou les conducteurs 24a, 24b se propage sur d'autres systèmes.

Dans un mode de réalisation, le capteur 28a a un noyau ferromagnétique ouvrable lors du montage pour y insérer le ou les conducteurs 24a, 24b. Ensuite le noyau ferromagnétique est refermé.

Selon un mode de réalisation, deux capteurs 28a sont utilisés pour chaque section 22. Le premier capteur 28a pour mesurer une valeur dépendant du ou des courants dans les conducteurs de la première polarité 24a et le deuxième capteur 28a pour mesurer une valeur dépendant du ou des courants dans les conducteurs de la deuxième polarité 24b. Dans ce cas, le premier capteur 28a mesure la dérivée du courant circulant dans le ou les conducteurs 24a et le deuxième capteur 28a mesure la dérivée du courant circulant dans le ou les conducteurs 24b. Par exemple dans ce cas, les bobines 32a du premier capteur et du deuxième capteur sont connectées en série de manière à obtenir la dérivée de la différence des courants (dl/dt) circulant dans les conducteurs 24a et 24b. Dans un autre mode de réalisation la mise en série est fait par un traitement de données, par exemple dans le dispositif de détection d'un phénomène électrique 16.

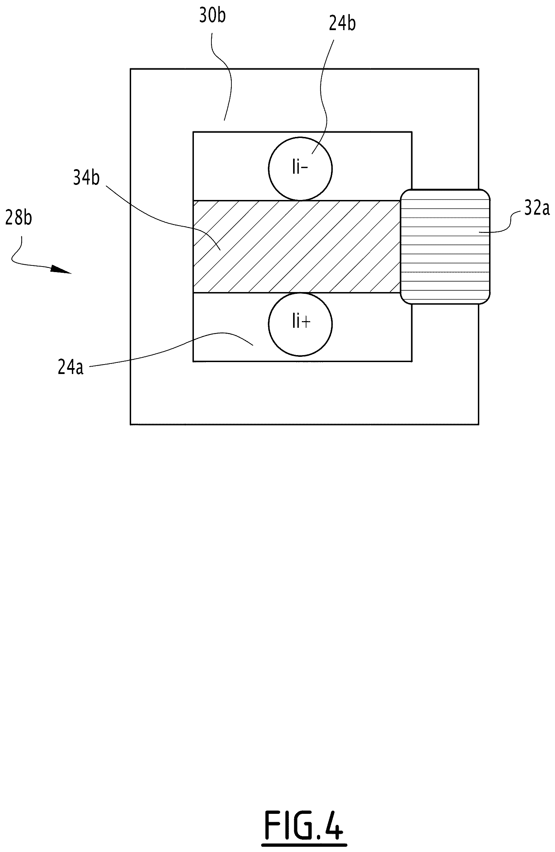

La figure 4 montre schématiquement un capteur 28b d'un autre mode de réalisation. Le capteur 28b est propre pour déterminer une valeur dépendant du ou des courants dans les conducteurs 24a, 24b. Dans le capteur 28b, les caractéristiques du capteur 28b ayant les mêmes fonctions présentent les mêmes chiffres de référence que le mode de réalisation du capteur 28a de la Figure 3, sauf avec un "b" à la suite du chiffre au lieu d'un "a" (sauf les conducteurs 24a, 24b qui présenteront les mêmes caractéristiques que dans la Fig. 3). Contrairement à la Fig. 3 le capteur 28b est pourvu d'un noyau ferromagnétique 30b ayant la forme d'un anneau carré.

Dans d'autres modes de réalisation, la forme du noyau ferromagnétique peut avoir encore d'autres formes, par exemple avoir une forme hexagonale, octogonal ou ovale.

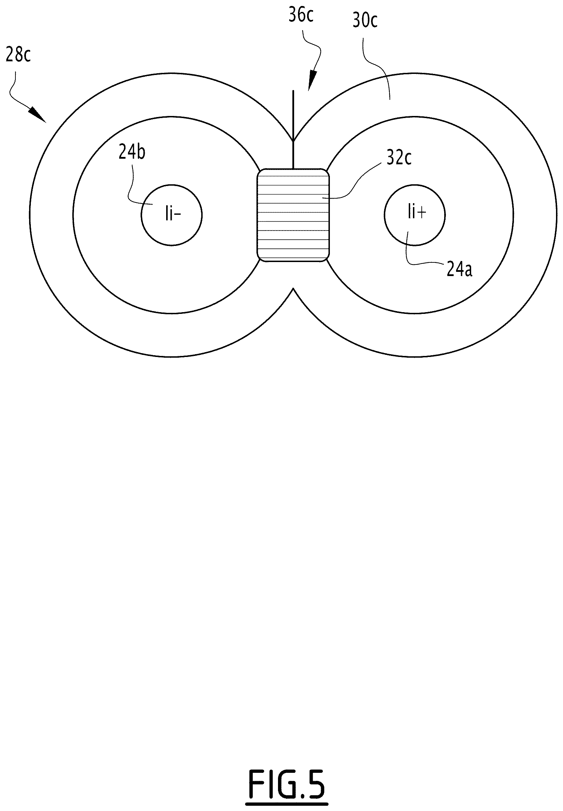

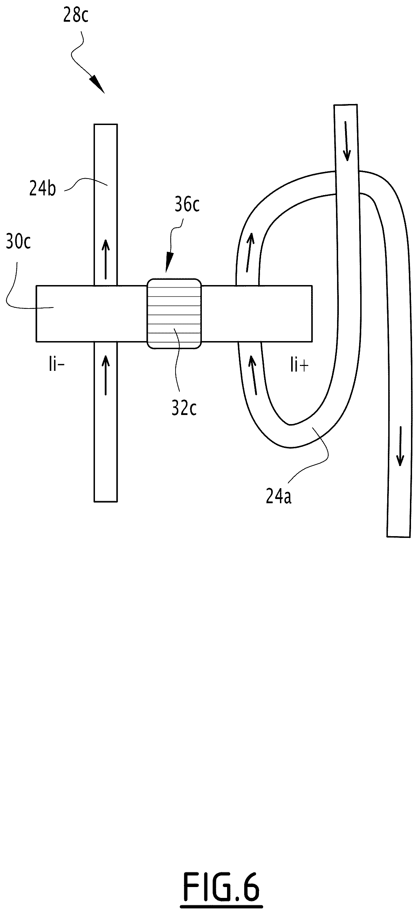

La figure 5 montre schématiquement un capteur 28c d'un autre mode de réalisation dans une vue axiale. L'axe correspond à l'axe des conducteurs 24a, 24b. La figure 6 est une vue de dessus du capteur 28c de la figure 5. Dans le capteur 28c, les caractéristiques du capteur 28c ayant les mêmes fonctions présentent les mêmes chiffres de référence que le mode de réalisation du capteur 28a de la Figure 3, sauf avec un "c" à la suite du chiffre au lieu d'un "a" (sauf les conducteurs 24a, 24b qui présenteront les mêmes caractéristiques que dans la Fig. 3). Le capteur 28c comprend un noyau ferromagnétique 30c à double tore et une seule bobine 32c. En d'autres termes le noyau ferromagnétique 30c comprend un premier tore et un deuxième tore. Le premier tore et le deuxième tore ont une section commune 36c. Chaque tore a une forme circulaire. Le premier tore est traversé par au moins un conducteur de la première polarité 24a et le deuxième tore est traversé par au moins un conducteur de la deuxième polarité 24b, en particulier de manière que le sens du courant dans le ou les conducteurs de la première polarité 24 et le sens du courant dans le ou les conducteurs de la deuxième polarité 24b sont approximativement parallèles entre elles, en particulier comme illustré dans la Figure 6.

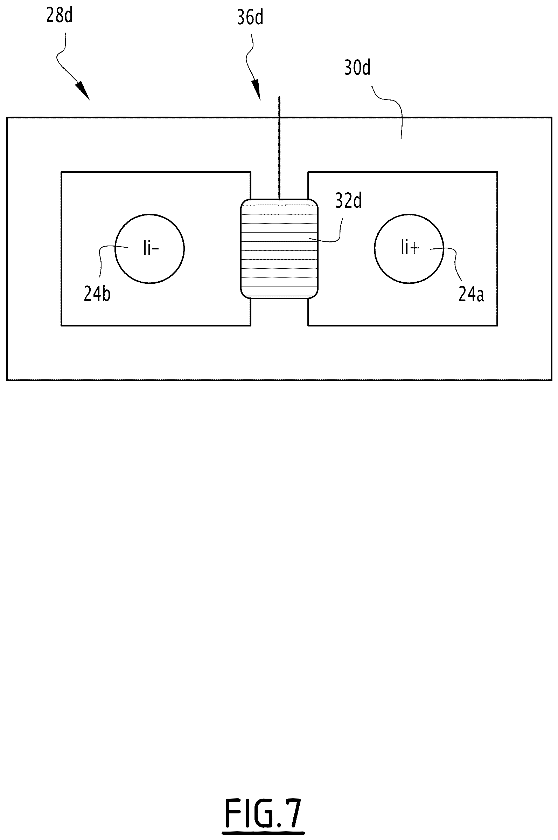

La figure 7 montre schématiquement un capteur 28d d'un autre mode de réalisation. Le capteur 28d est propre pour déterminer une valeur dépendant du ou des courants dans les conducteurs 24a, 24b. Dans le capteur 28d, les caractéristiques du capteur 28c ayant les mêmes fonctions présentent les mêmes chiffres de référence que le mode de réalisation du capteur 28c de la Figure 5, sauf avec un "d" à la suite du chiffre au lieu d'un "c" (sauf les conducteurs 24a, 24b qui présenteront les mêmes caractéristiques que dans la Fig. 3). Contrairement à la Fig. 3 le capteur 28d est pourvu d'un noyau ferromagnétique 30d ou chaque tore à la forme d'un anneau carré.

Selon un mode de réalisation, tous les conducteurs 24a, 24b associés à chaque section 22 traversent le capteur 28a, 28b, 28c, 28d, en particulier le noyau ferromagnétique 30a, 30b, 30c, 30d.

Dans un mode de réalisation, le ou les capteurs est/sont agencé(s), électriquement, entre le mécanisme d'entrainement 10 (SADM) et l'unité de conditionnement d'énergie 14 (PCU). Par exemple, le ou les capteurs est/sont agencé(s) sur une carte électronique dans le dispositif de détection 16 qui intègre un noyau ferromagnétique.

Dans un autre mode de réalisation, le capteur est un capteur de courant. Par exemple chaque capteur de courant est propre à mesurer la valeur du courant. Les capteurs sont, par exemple, intégrés dans l'unité de conditionnement d'énergie 14. Par exemple le capteur peut être pourvu d'une résistance dont on mesure à ses bornes une différence de potentiel qui est comparée à une référence, par exemple une inductance couplée aux bornes de laquelle on vient mesurer la variation de tension induite par une variation de courant.

Selon un mode de réalisation, les capteurs sont situés dans le corps 7 du véhicule spatial entre le mécanisme d'entrainement 10 (SADM) et l'unité de conditionnement d'énergie 14 (PCU). Un premier capteur de courant est propre, par exemple, à mesurer le courant dans le conducteur de la première polarité 24a et un deuxième capteur de courant est propre, par exemple, à mesurer le courant dans le conducteur de la deuxième polarité 24b. Ensuite, la somme vectorielle des courants est calculée, par exemple le dispositif 16 de détection d'un phénomène électrique.

Selon l'invention, les mesures par des courants dans les conducteurs 24a, 24b les capteurs 28, 28a, 28b, 28c, 28d ne perturbent pas le fonctionnement du générateur solaire 9, ni dégradent, dé-fiabilisent la mission du véhicule spatial. En plus, l'invention permet la protection des conducteurs 24, 24a, 24b entre la diode de blocage du générateur solaire 9 et le PCU 14 incluant le SADM 10 contre les arcs.

Selon un mode de réalisation, le courant est compté positif, s'il circule dans les conducteurs 24a, 24b du générateur solaire vers le corps du satellite.

Lors du fonctionnement normal, c'est-à-dire s'il n'y a pas un phénomène électrique ou un FO, à tout instant pour un générateur solaire 9, la somme sur toutes les sections 22 des sommes vectorielles des courants de chaque paire de conducteurs est zéro.

Par exemple, dans la Figure 2, I1+I2+I3+I4+I5+I6=0, avec I1, I2, I3, I4, I5 et I6 étant les sommes vectorielles des courants des sections du générateur solaire circulant respectivement dans les conducteurs 24a, 24b. Plus généralement :

$\sum_{i=1}^{N} I_i = 0$ , avec N le nombre de sections, $I_i$ étant la somme vectorielle des courants dans la paire de conducteurs 24 de la section i.

En plus, lors du fonctionnement normal, la somme vectorielle du courant de chaque paire de conducteurs est égale zéro. Dans l'exemple de la figure 2:

$$I1=I2=I3=I4=I5=I6=0$$

Plus généralement $I_i = 0$, pour toutes les sections i.

En outre, lors du fonctionnement normal, chaque section 22 du générateur solaire 9 génère un courant continu. Donc, la dérivée de la somme vectorielle du courant de chaque paire de conducteurs est zéro. Par exemple, dans l'exemple de la Figure 2

$$dI1/dt = dI2/dt = dI3/dt = dI4/dt = dI5/dt = dI6/dt= 0$$

Plus généralement $\frac{dI_i}{dt} = 0$ (la dérivée de la somme vectorielle du courant I de chaque paire de conducteur) pour toutes les sections i).

Dans la suite, les comportements des courants pour chaque section lors d'une décharge électrostatique (Flashover - FO en anglais) sont expliqués. Le FO est un phénomène électrique.

Lors d'une propagation de décharge électrostatique (Flashover - FO), il existe une section 22 du générateur solaire 9 qui émet le FO et une ou plusieurs sections qui collecte(nt) le courant du FO.

Lors d'un FO, la somme vectorielle des courants de la paire de conducteurs de la section qui émet le FO, notamment avec un spot cathodique sur cette section, est positive et pour les sections qui collectent le courant du FO, la somme vectorielle des courants des paires de conducteurs est respectivement négative. Donc, lors d'un FO, il y a certaines sections 22 où la somme vectorielle des courants dans les paires de conducteurs est différent de zéro.

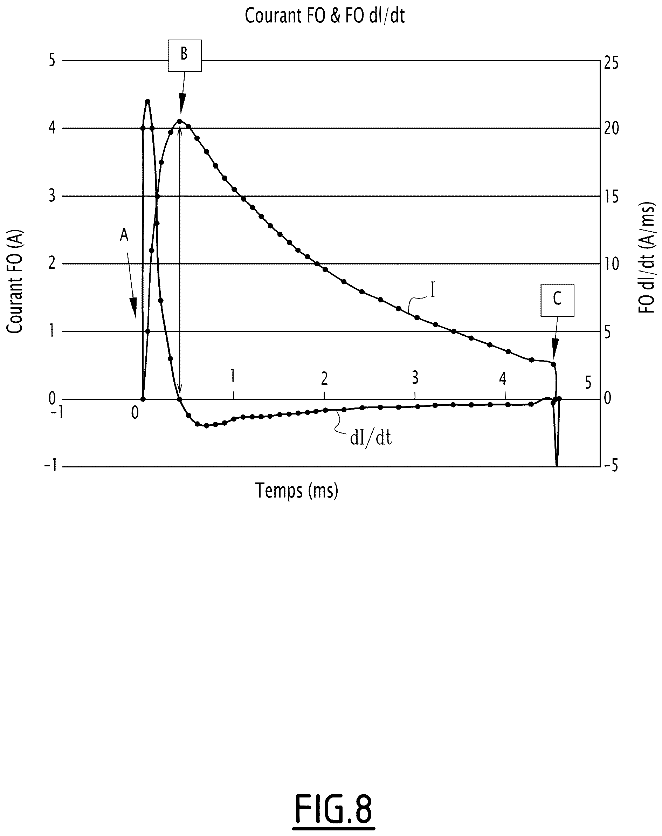

La figure 8 montre un graphe de la somme vectorielle des courants et de la dérivée de la somme vectorielle des courants d'une section 22 qui émet un FO du générateur solaire 9.

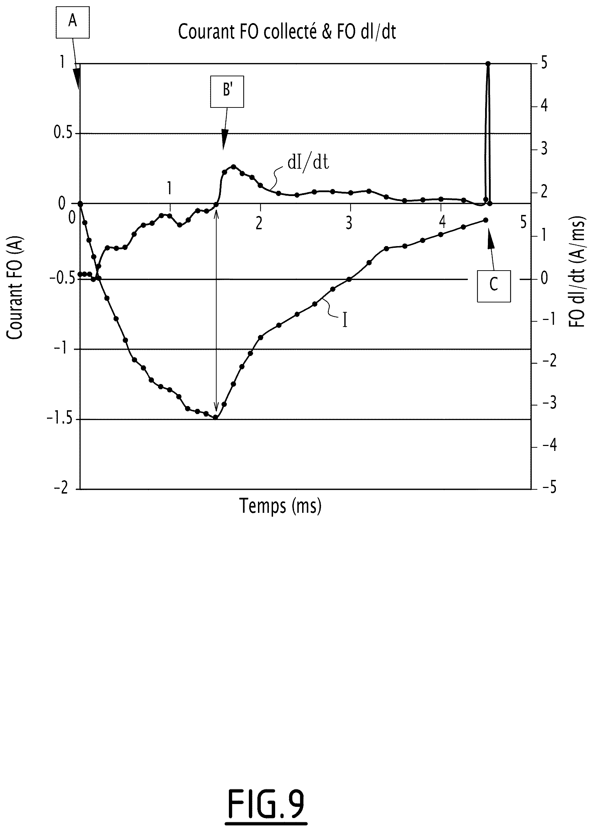

La figure 9 montre un graphe de la somme vectorielle des courants et de la dérivée de la somme vectorielle des courants d'une section 22 du générateur solaire 9 qui collecte le courant d'un FO.

Avant et pendant un FO, la somme des sommes vectorielles des courants de chaque section est zéro. Dans l'exemple de la Fig. 2 : I1+I2+I3+I4+I5+I6= 0. Plus généralement:

$$\sum_{i=1}^{N} I_i = 0 \qquad (1).$$

avec N le nombre de sections, $I_i$ étant la somme vectorielle des courants dans les paires de conducteurs 24 de la section i.

De plus, avant et pendant un FO la somme de chaque dérivée de la somme vectorielle des courants de chaque paire de conducteurs 24 d'une section 22 d'un générateur solaire 9 est égale à zéro. En d'autres termes, dans l'exemple de la Fig. 2 : dI1/dt +dI2/dt+dI3/dt+dI4/dt+dI5/dt+dI6/dt= 0. Plus généralement :

$$\sum_{i=1}^{N} \frac{dI_i}{dt} = 0 \qquad (2).$$

avec N le nombre de sections, $I_i$ étant la somme vectorielle des courants dans les paires conducteurs 24 de la section i et t le temps.

Les équations (1) et (2) s'appliquent sauf s'il y a encore un autre phénomène électrique ou un autre circuit électrique possible, par exemple une fuite dans un conducteur ou si un courant est collecté par la propulsion électrique 18.

Sur les Figures 8 et 9 le début du FO est marqué par A, le temps du maximum (absolu) de la somme vectorielle du courant est marqué respectivement par B et B', et le temps d'extinction du FO est marqué par C.

Lors du démarrage du FO, la dérivée de la somme vectorielle du courant de la paire de conducteurs 24 de la section 22 qui émet un FO a un pic positif (au temps A sur la Figure 8), et lors du temps d'extinction du FO la dérivée de la somme vectorielle du courant de la paire de conducteurs 24 de la section 22 qui émet un FO a un pic négatif (Figure 8).

L'estimation du maximum de la somme vectorielle du courant du FO est possible avec le calcul d'une intégrale entre A et B ce qui correspond à la surface suivant la courbe FO dI/dt entre A et B. Lorsqu'il y a un FO, il y a une seule section 22 qui émet et le ou les autres sections 22 collectent le courant.

Lors du démarrage du FO, la dérivée de la somme vectorielle du courant de la paire de conducteurs 24 de chaque section 22 qui collecte un FO a un pic négatif (marqué par A dans la Figure 9), et lors du temps d'extinction du FO la dérivée de la somme vectorielle du courant de la paire de conducteurs 24 de la section 22 qui collecte un FO a un pic positif (marqué par C sur la Figure 9).

Au point B', la dérivée de la somme vectorielle du courant de chaque paire de conducteurs 24 d'une section 22 qui collecte un FO est zéro. Il est à noter que plus les sections 22 qui collectent sont éloignées de la section qui émet le FO, plus le temps du pic du courant (temps B' sur la Figure 9) est grand. Cela correspond au temps de propagation du FO entre le site du spot cathodique de la section qui émet et les différentes sections qui collectent. Le temps du pic du courant est aussi appelé tpeak. En plus, plus les sections 22 qui collectent sont éloignées de la section qui émet, plus le dI/dt (point A sur la Figure 9) au démarrage est faible.

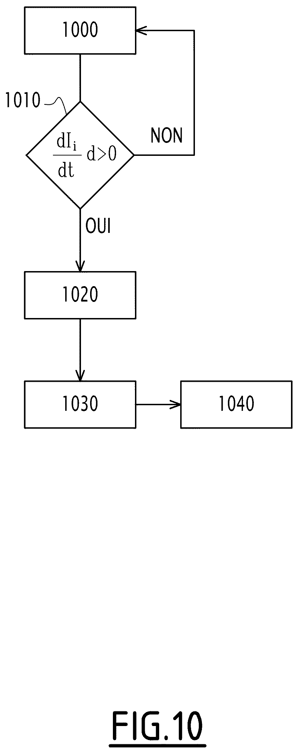

Dans la suite, la détermination de la présence d'un phénomène électrique est décrite. La figure 10 montre un organigramme d'un procédé selon un mode de réalisation.

Dans une première étape 1000, un courant de mode commun pour chaque section 22 associée à au moins une paire de conducteurs 24a, 24b et/ou la dérivée du courant de mode commun pour chaque section 22 associée à au moins une paire de conducteurs 24a, 24best/sont déterminé(e)s. Dans un mode de réalisation, le courant de mode commun pour chaque section 22 et/ou la dérivée du courant de mode commun pour chaque section 22 est/sont enregistré(e)s.

La somme vectorielle du courant de chaque section correspond à un courant de mode commun et peut être également appelé courant homopolaire.

Par exemple, avant un FO (détection d'une propagation de décharge), lors d'un fonctionnement normal, la somme des courants de chaque section 22 est constant. Plus généralement $\frac{dI_i}{dt} = 0$ (la dérivée du courant de mode commun I de chaque section 22) pour toutes les sections i.

Dans l'étape 1010, il est déterminé si le courant de mode commun I de chaque section est au-dessus d'un seuil s

($I_i > s > 0$) , ou si la dérivée du courant de mode commun I de chaque section est au-dessus d'un seuil d ($\frac{dI_i}{dt} > d > 0$). Dans ce cas, les sections qui émettent sont détectées.

Dans un autre mode de réalisation, toutes les sections qui collectent sont détectées. Dans ce cas, les courants et le seuils sont négatif, par exemple ($I_i < s_c < 0$) ou ($\frac{dI_i}{dt} < d_c < 0$).

Si $\frac{dI_i}{dt} > d > 0$ pour au moins une section 22, avec d étant un seuil, ou si $I_i > s > 0$ pour au moins une section 22 avec s étant un seuil, dans l'étape 1020 il est déterminé si d'autres conditions pour un FO sont remplies, en particulier si toutes les conditions sont remplies. Dans le mode de réalisation où les sections qui collectent sont détectées par la comparaison indiqué ci-dessus, il est également déterminé si d'autres conditions pour un FO sont remplies.

Les conditions sont les suivantes :

A) si au moment du démarrage du FO (point A sur les figures 8 et 9) :

    a) $\sum_{i=1}^{N} \frac{dI_i}{dt} = 0$ au bruit et incertitudes de mesure près (équation (2));

    b) dI/dt>0 pour une section (qui émet) ;

    c) dI/dt <0 pour au moins une autre section (qui collecte) ;

    d) dI/dt=0 pour les autres sections ; et

    e) les sections qui émet et qui collectent sont tous adjacentes.

Concernant la condition e), par exemple, si les sections 2, 3 et 4 sont concernées par les conditions b) et c), la condition e) est remplie. Si les sections 1, 3, 4 sont concernées par les conditions b) et c), la condition e) n'est pas remplie.

B) Si du moment du démarrage (moment A sur les figures 8 et 9) jusqu'à l'extinction (moment C sur les figures 8 et 9) pour tout instant t :

    a) $\sum_{i=1}^{N} \frac{dI_i}{dt} = 0$ au bruit et incertitudes de mesure près ;

    b) $\sum_{i=1}^{N} I_i = 0$ , au bruit et incertitudes de mesures près, la somme des courants I(t), si elles ne sont pas directement mesurées sont calculées en intégrant de t0 (moment du démarrage A sur les figures 8 et 9) à t;

    c) I>0 pour une section (qui émet) ;

    d) I <0 pour au moins une autre section (qui collecte) ;

    e) I =0 pour les autres sections ; et

    f) les sections qui émet et qui collectent sont tous adjacentes.

Concernant la condition e), par exemple, si les sections 2, 3 et 4 sont concernées par les conditions b) et c), la condition e) est remplie. Si les sections 1, 3, 4 sont concernées par les conditions b) et c), la condition e) n'est pas remplie.

C) Si au moment de l'extinction du FO (temps C sur les figures 8 et 9) :

    a) une extinction des dI/dt synchronisés (les temps C sont au même moment pour toutes les sections qui émettent et collectent)

    b) dI/dt<0 pour une section (qui émet) ;

    c) dI/dt > 0 pour au moins une autre section (qui collecte) ; et

    d) dI/dt=0 pour les autres sections.

D) Si

    a) Plus les sections qui collectent sont éloignées de la section qui émet, plus tpeak (point B' sur la figure 9) est grand,

    b) Condition optionnelle : Plus les sections qui collectent sont éloignées de la section qui émet, plus leur dI/dt au démarrage est faible.

Dans un mode de réalisation, en particulier si le véhicule spatial est équipé d'un dispositif de propulsion 18 électrique, lors de la phase de démarrage ou arrêt du dispositif de propulsion 18, les formules (1) et (2) (cf. conditions A) a), B) a), et B) c)) sont modifiées avec les équations suivantes :

$$\sum_{i=1}^{N} I_i = -I_c \qquad\qquad (1'),$$

et

$$\sum_{i=1}^{N} \frac{dI_i}{dt} = -\frac{dI_c}{dt} \qquad\qquad (2'),$$

Avec Ic étant le courant collecté. Le courant collecté Ic entre une section du générateur solaire 9 et le dispositif de propulsion. Le courant collecté Ic peut être déterminé lors des phases de démarrage ou arrêt sans FO. Dans ce cas dIc/dt <0 au démarrage de la propulsion et dIc/dt> 0 lors de l'arrêt de la propulsion. Pour les sections 22 qui commutent, c'est-à-dire qui basculent en alternance entre un état court-circuité et non court-circuité, le signal dIc/dt dépend de la fréquence de la commutation. La variation de courant liée au démarrage du dispositif de propulsion 18 est principalement fournie par la capacitance du bus d'alimentation électrique $C_{Bus}$ (capacité équivalente du bus). Au niveau du générateur solaire cela se traduit par la connexion, par exemple avec un commutateur électronique, d'une section sur le bus d'alimentation de manière à fournir le courant de fonctionnement aux consommateurs d'énergie électrique et à fournir le courant nécessaire à la recharge de la capacitance du bus $C_{Bus}$ .

Dans une étape optionnelle 1030, en cas du phénomène électrique détecté, ici le FO, le système, en particulier le système de détection d'un phénomène électrique 16 et/ou l'unité de traitement de données 20 détermine une ou plusieurs informations suivantes : une date du phénomène électrique, le générateur solaire concerné par le phénomène électrique respectif, la section 22 qui émet le FO, la ou les sections 22 qui collectent le FO, le courant maximal du FO de la section qui émet, la durée du FO, en particulier avec le courant de la section 22 qui émet, et/ou la forme en fonction du temps du courant du FO avec le courant de la section qui émet.

Tout ou une partie de ce traitement peut être effectué sur le véhicule spatial et être complété au sol, par exemple dans l'unité de traitement de données 20.

Dans un mode de réalisation, les informations sont complétées avec, à l'instant du phénomène électrique : l'état électrique des sections du générateur solaire (en marche, hors fonction, par exemple court-circuité, commutation), générateur solaire en éclipse, générateur solaire illuminé, ombrage de sections 22, état de la propulsion électrique 18, courant d'une ou des sections, et des transitoires de la propulsion électrique.

Ce traitement complémentaire peut être fait à bord sur le véhicule spatial et/ou au sol, notamment dans l'unité de traitement de données 20.

Ces informations permettront d'avoir une distribution des caractéristiques des FO observés, qui sera utile à la définition du FO à simuler lors des essais de qualification au sol.

Ces informations pourront aussi être utiles pour corréler des évènements observés en vol avec les phénomènes électriques déterminés sur ce véhicule spatial.

Ces informations peuvent être utilisées pour améliorer des modèles théoriques.

Dans une étape optionnelle 1040, en cas du phénomène électrique détecté, notamment en cas de FO détecté, le dispositif de détection d'un phénomène électrique 16 est propre à court-circuiter la section 22 qui émet le FO et/ou les sections 22 adjacentes de la section 22 qui émet le FO, par exemple par l'unité de conditionnement d'énergie 14. Le nombre de sections 22 adjacentes dépend de la distance vis-à-vis de la section 22 qui émet le FO. Ça permet d'éviter un arc secondaire associé et une dégradation du générateur solaire 9. La durée du court-circuit des sections 22 dépend de la durée du FO détecté et/ou de la taille du générateur solaire. Par exemple, la durée du court-circuit est au moins 10 ms, par exemple au moins 20 ms.

Selon un mode de réalisation, après que la durée du court-circuit soit dépassée ou écoulée, les sections 22 court-circuitées sont reconnectées au bus d'alimentation par l'unité de conditionnement d'énergie. Donc le dispositif de détection d'un phénomène électrique 16 est un dispositif d'extinction d'arc suite à la détection d'un FO. Ce dispositif d'extinction d'arc suite à la détection d'un FO a l'avantage de réduire la durée des arcs secondaires en orbite, même si le FO continue indépendamment sa propagation, avec une durée supérieure à celle des arcs secondaires. Ceci permet de réduire les contraintes associées pour les essais de qualification pour des générateurs solaires de grande surface.

L'invention permet d'augmenter la tension différentielle entre cellules solaires au-dessus de 30V et d'augmenter le courant maximal d'un string au-dessus de 1.5A.

Selon un mode de réalisation, un autre phénomène électrique, notamment d'un arc (secondaire) sans FO est détecté, par exemple qui est déclenché par un impact d'un micro météore et déchet orbital (Micrometeoroids and Orbital Debris - MMOD). Suite à cette détection d'un arc secondaire, la ou les section(s) concernée(s) sont court-circuitées pour éteindre l'arc, comme décrit ci-dessus.

Dans le cas d'un arc secondaire entre cellules de différents sections 22, le courant de mode commun I de paires des conducteurs des sections concernées n'est pas nul et la somme des sections est égale zéro, c'est-à-dire $\sum_{i=1}^{N} I_i = 0$ . Cette détection ne fonctionne pas lors de la phase de démarrage ou d'arrêt du dispositif de propulsion 18.

Donc, le dispositif de détection d'un phénomène électrique 16 est propre à calculer la somme des courants de mode commun des paires des conducteurs 24, 24a, 24b. Si $\sum_{i=1}^{N} I_i = 0$, les courants de mode commun des deux sections entre lesquelles l'arc secondaire s'établit est non nul, l'une des sections ayant un courant de mode commun positif et l'autre section ayant un courant de mode commun négatif correspondant, et les courants de mode commun des autres sections étant nuls, le dispositif de détection d'un phénomène électrique 16 est propre à déterminer qu'il y a un arc entre deux sections sans FO.

Dans le cas d'un arc secondaire entre cellules de de la même section 22, le courant de mode commun de chaque section est nulle, alors $\sum_{i=1}^{N} I_i = 0$, et une variation de courant de mode commun est détectée, en particulier par l'unité de conditionnement d'énergie 14. Dans ce cas, l'unité de conditionnement d'énergie informe le dispositif de détection 16. La variation détectée correspond à une perte partielle ou total d'un string de la section concernée, par exemple si une diode de blocage est utilisée par string. Si ces conditions sont remplies, le dispositif de détection 16 détermine qu'il y a un arc entre cellules d'une même section sans FO .

Dans un autre mode de réalisation, des arcs localisés entre les diodes de blocage et l'unité de conditionnement d'énergie 14, par exemple au niveau du mécanisme d'entrainement (SADM), sont détectables avec une chute de courant et/ou de tension sur la section concernée, par exemple par l'unité de conditionnement d'énergie 14 ou par le dispositif de détection d'un phénomène électrique 16.

Dans un autre mode de réalisation un autre phénomène électrique, notamment lorsqu'un arc primaire sans FO est détectée, par exemple un blow-off. C'est une décharge de la capacité du véhicule spatial vers l'espace, qui peut passer dans le conducteur du générateur solaire 9. Dans ce cas c'est une décharge d'une charge négative rapide du satellite 3 depuis un site du satellite qui n'est pas nécessairement sur un générateur solaire 9. Les générateurs solaires contribuent à cette décharge globale donc un courant de décharge a lieu entre les sections et le corps 7 du satellite 3. Dans ce cas le dispositif de détection d'un phénomène électrique détermine si $I_i < 0$ pour toutes les sections (courant vers toutes les sections du générateur solaire). Si tel est le cas, le dispositif de détection 16 détermine qu'il y a un arc primaire sans FO, dont le site n'est pas sur un générateur solaire.

Liste de signes de référence

| 1 | système |
| 3 | satellite |
| 5 | terre |
| 7 | corps |
| 9 | générateur solaire |
| 10 | mécanisme d'entrainement |
| 12 | consommateur d'énergie électrique |
| 14 | l'unité de conditionnement d'énergie |
| 16 | Dispositif de détection d'un phénomène électrique du générateur solaire |
| 18 | dispositif de propulsion |
| 20 | unité de traitement de données |
| 22 | section |
| 24 | paire de conducteurs |
| 24a, 24b | conducteur |
| 26 | terre |
| 28, 28a, 28b, 28c, 28d | capteur |
| 30a, 30b, 30c, 30d | noyau ferromagnétique |
| 32a, 32b, 32c, 32d | bobine |
| 34a, 34b | barrière d'isolation |
| 36c, 36d | section commune |

**Revendications**

**1.** Système (1) comprenant :

un véhicule spatial (3) avec :

au moins un générateur solaire (9) propre à générer un courant électrique, chaque générateur solaire étant couvert par un matériau transparent de protection, chaque générateur solaire comprenant une pluralité de sections ;

au moins un consommateur d'énergie électrique (12), chaque générateur solaire étant propre à fournir le courant électrique à au moins un consommateur d'énergie électrique (12, 14, 16, 18) du véhicule spatial (3) ;

au moins une paire (24) de conducteurs électriques associée à chaque section pour fournir le courant électrique de chaque section de chaque générateur solaire au consommateurs d'énergie électrique respectifs, les paires (24) de conducteurs comprenant au moins un conducteur (24a, 24b) pour chaque polarité ;

**caractérisée en ce que**

le véhicule spatial (3) comprend pour chaque section (22) associée à au moins une paire (24) de conducteur au moins un capteur (28, 28a, 28b, 28c, 28d) pour mesurer une valeur dépendant du ou des courants dans les conducteurs ; et

**en ce que** le système comprend au moins un dispositif (16, 20) de détection d'un phénomène électrique du générateur solaire (9), le dispositif de détection d'un phénomène électrique étant propre à :

déterminer (1000) un courant de mode commun pour chaque section (22) et/ou la dérivée du courant de mode commun pour chaque section (22), et

déterminer la présence d'un phénomène électrique et la ou les section(s) (22) du générateur solaire (9) concernée(s) par le phénomène électrique déterminé à partir du courant de mode commun de chaque section (22) et/ou la dérivée du courant de mode commun de chaque section (22).

2. Système selon l'une des revendications précédentes, **caractérisé en ce que** chaque générateur solaire (9) comprend au moins deux sections.

3. Système selon l'une des revendications précédentes, **caractérisé en ce que** chaque générateur solaire (9) forme une aile photovoltaïque.

4. Système selon l'une des revendications précédentes, **caractérisé en ce que** le véhicule spatial (3) est un satellite et/ou une sonde spatiale.

5. Système selon l'une des revendications précédentes, **caractérisé en ce que** le capteur (28, 28a, 28b, 28c, 28d) est un capteur mesurant la dérivée d'un courant, en particulier un capteur comprenant une bobine torique, ou un capteur de courant.

6. Système selon l'une des revendications précédentes, comprenant exactement un capteur (28, 28a, 28b, 28c, 28d) par paire de conducteurs (24a, 24b).

7. Système selon l'une des revendications précédentes **caractérisé en ce que** le phénomène électrique est une propagation de décharge, un arc secondaire, un arc primaire sans propagation de décharge, et/ou des courants transitoires entre générateur solaire et propulsion électrique.

8. Système selon l'une des revendications précédentes, **caractérisé en ce que** le véhicule spatial (3) est propre à passiver la ou les sections concernée(s) déterminée(s), par exemple à court-circuiter la ou les section(s) (22) concernée(s) déterminée(s).

9. Système selon l'une des revendications précédentes, **caractérisé en ce que** le dispositif de détection d'un phénomène électrique (16) étant propre à calculer la somme de toutes les courants de mode commun de chaque section (22) et/ou à calculer la somme de toutes les dérivées des courants de mode commun de chaque section (22) d'un générateur solaire, et en utilisant le résultat du calcul de la somme de tous les courants de mode commun de chaque section (22) et/ou de la somme de toutes les dérivées des courants de mode commun de chaque section (22) d'un générateur solaire, le dispositif de détection d'un phénomène électrique (16) étant propre à déterminer le type du phénomène électrique parmi une détection d'une propagation de décharge, un arc secondaire, un arc primaire sans propagation de décharge, et/ou des courants transitoires entre générateur solaire et propulsion électrique.

10. Système selon l'une des revendications précédentes, **caractérisé en ce que** le véhicule spatial (3) comprend une unité de conditionnement d'énergie (14) et **en ce que** l'unité de conditionnement d'énergie comprend les capteurs (28, 28a, 28b, 28c, 28d).

11. Système selon l'une des revendications précédentes **caractérisé en ce que** au moins un dispositif de détection d'un phénomène électrique du générateur solaire (20) est agencé au sol.

12. Système selon l'une des revendications précédentes 1 à 10, **caractérisé en ce que** au moins un dispositif de détection d'un phénomène électrique du générateur solaire (14) est agencé dans le véhicule spatial.

13. Système selon l'une des revendications précédentes 1 à 10, **caractérisé en ce que** une première partie d'un dispositif de détection d'un phénomène électrique du générateur solaire (14) est agencé dans le véhicule spatial et une deuxième partie du dispositif de détection d'un phénomène électrique du générateur solaire (14) est agencé au sol.

14. Procédé pour déterminer un phénomène électrique d'un générateur solaire d'un véhicule spatial avec :

au moins un générateur solaire (9) propre à générer un courant électrique, chaque générateur solaire (9) étant couvert par un matériau transparent de protection, chaque générateur solaire comprenant une pluralité de sections (22) ;
au moins un consommateur d'énergie électrique (12, 14, 16), chaque générateur solaire étant propre à fournir le courant électrique à au moins un consommateur d'énergie électrique du véhicule spatial ;
au moins une paire de conducteurs (24, 24a, 24b) électrique associé à chaque section pour fournir l'énergie électrique de chaque section de chaque générateur solaire aux consommateurs d'énergie électrique respectifs, les paires de conducteurs comprenant au moins un conducteur pour chaque polarité ;

le procédé comprenant :

obtenir une mesure dans chaque paire de conducteurs une valeur dépendant du ou des courants dans les conducteurs (24a, 24b) ; et
déterminer le courant de mode commun pour chaque section (22) et/ou la dérivée du courant de mode commun pour chaque section (22), et
déterminer la présence du phénomène électrique et la ou les sections du générateur solaire concernée(s) par le phénomène électrique, à partir du courant de mode commun de chaque section (22) et/ou la dérivée du courant de mode commun de chaque section (22) .

9    10    16  7    10    9    3

12    18    14    1

20    5

16

# FIG.1

+ Direction du courant

Section 6 · Section 5 · Section 4 · Section 3 · Section 2 · Section 1

**FIG.2**

FIG.3

**FIG.4**

28c

36c    30c

24b

li−

32c

li+

24a

## FIG.5

28c

24b

30c

36c

li−

32c

li+

24a

# FIG.6

28d   36d   30d   32d   li−   24b   li+   24a

FIG.7

FIG.8

FIG.9

1000

1010

$$\frac{dI_i}{dt} d > 0$$

NON

OUI

1020

1030 → 1040

FIG.10

Europäisches Patentamt

European Patent Office

Office européen des brevets

**RAPPORT DE RECHERCHE EUROPEENNE**

Numéro de la demande

EP 25 22 5897

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | KAWASAKI ET AL: "Charge Neutralization via Arcing on a Large Solar Array in the GEO Plasma Environment", IEEE TRANSACTIONS ON PLASMA SCIENCE, IEEE SERVICE CENTER, PISCATAWAY, NJ, US, vol. 34, no. 5, 1 octobre 2006 (2006-10-01), pages 1979-1985, XP011149429, ISSN: 0093-3813, DOI: 10.1109/TPS.2006.881932 | 1-8, 10-14 | INV. B64G1/44 B64G1/54 H10F10/00 ADD. B64G1/42 H02S50/00 |
| A | * page 1 - page 5; figures 1-6 * | 9 | |
| Y | EP 3 723 218 B1 (HUAWEI TECH CO LTD [CN]) 29 décembre 2021 (2021-12-29) | 1-8, 10-14 | |
| A | * alinéa [0002] - alinéa [0053]; figures 1-15 * | 9 | |
| A | US 2017/093326 A1 (BOULANGER BERNARD [FR] ET AL) 30 mars 2017 (2017-03-30) * alinéa [0032] - alinéa [0034]; figures 2-4 * | 8 | |
| A | JEAN-CHARLES MATEO-VELEZ ET AL: "Conceptual Design and Assessment of an Electrostatic Discharge and Flashover Detector on Spacecraft Solar Panels", IEEE TRANSACTIONS ON PLASMA SCIENCE, IEEE SERVICE CENTER, PISCATAWAY, NJ, US, vol. 40, no. 2, 1 février 2012 (2012-02-01), pages 246-253, XP011408758, ISSN: 0093-3813, DOI: 10.1109/TPS.2011.2173955 * figures 1-14 * | 1-14 | **DOMAINES TECHNIQUES RECHERCHES (IPC)**<br>B64G H10F H02S G01R |
| A | CN 118 444 105 A (XIAMEN KEHUA SHUNENG TECH CO LTD) 6 août 2024 (2024-08-06) * figures 1-5 * | 1-14 | |

Le présent rapport a été établi pour toutes les revendications

| Lieu de la recherche | Date d'achèvement de la recherche | Examinateur |
|---|---|---|
| Munich | 13 avril 2026 | Retucci, Adriano |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 22 5897

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-04-2026

| Document brevet cité au rapport de recherche | | Date de publication | Membre(s) de la famille de brevet(s) | | Date de publication |
|---|---|---|---|---|---|
| EP 3723218 | B1 | 29-12-2021 | CN | 111512511 A | 07-08-2020 |
| | | | DK | 3723218 T3 | 31-01-2022 |
| | | | EP | 3723218 A1 | 14-10-2020 |
| | | | ES | 2905541 T3 | 11-04-2022 |
| | | | US | 2020326385 A1 | 15-10-2020 |
| | | | WO | 2019127440 A1 | 04-07-2019 |
| US 2017093326 | A1 | 30-03-2017 | CA | 2943026 A1 | 25-03-2017 |
| | | | CN | 107026598 A | 08-08-2017 |
| | | | EP | 3147952 A1 | 29-03-2017 |
| | | | FR | 3041816 A1 | 31-03-2017 |
| | | | JP | 6877931 B2 | 26-05-2021 |
| | | | JP | 2017063606 A | 30-03-2017 |
| | | | US | 2017093326 A1 | 30-03-2017 |
| CN 118444105 | A | 06-08-2024 | AUCUN | | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 9190836 B2

**Littérature non-brevet citée dans la description**

- **VIRGINIE INGUIMBERT et al.** Measurements of the Flashover Expansion on a Real-Solar Panel-Preliminary Results of EMAGS3 Project. *IEEE TRANSACTIONS ON PLASMA SCIENCE*, December 2013, vol. 41 (12)